# EUROPEAN PATENT APPLICATION

(11) **EP 3 905 756 A1**
(43) Date of publication of application: **03.11.2021**
(21) Application number: 20744664.2
(22) Date of filing: 17.01.2020
(51) Int. Cl.: H04W 24/02, H04W 92/12, H04W 88/12, H04W 88/08

(54) **NETWORK CONFIGURATION METHOD AND COMMUNICATION APPARATUS**

(30) Priority: 22.01.2019 CN 201910059172
(71) Applicant: Huawei Technologies Co., Ltd., Longgang District Shenzhen, Guangdong 518129 (CN)
(72) Inventor: LI, Shikun, Shenzhen, Guangdong 518129 (CN); LI, Huan, Shenzhen, Guangdong 518129 (CN); JIN, Weisheng, Shenzhen, Guangdong 518129 (CN); ZENG, Zhengyang, Shenzhen, Guangdong 518129 (CN)
(74) Representative: Maiwald Patent- und Rechtsanwaltsgesellschaft mbH
(86) International application number: PCT/CN2020/072644
(87) International publication number: WO 2020/151584

(57) **Abstract**

This application provides a network configuration method and a communications apparatus. The method includes: An AC sends configuration status information to a first access point AP, where the configuration status information is used to perform network configuration on the first AP; and the first AP performs network configuration based on the configuration status information sent by the AC, to implement communication between the first AP and a terminal device by using a 3rd generation partnership project 3GPP access mode. According to the network configuration method provided in this application, the AC may send the configuration status information to the AP. After performing network configuration, the AP may communicate with the terminal device through a 3GPP air interface. This reduces complexity of a 3GPP network architecture, and deployment and operation and maintenance are relatively simple and flexible.

## Description

This application claims priority to Chinese Patent Application No. 201910059172.9, filed with the Chinese Patent Office on January 22, 2019 and entitled "NETWORK CONFIGURATION METHOD AND COMMUNICATIONS APPARATUS", which is incorporated herein by reference in its entirety.

### TECHNICAL FIELD

This application relates to the communications field, and in particular, to a network configuration method and a communications apparatus.

### BACKGROUND

A wireless communications system architecture defined by the 3rd generation partnership project (3^{rd} generation partnership project, 3GPP) mainly includes a terminal device, an access network device, a core network device, and a data network. Especially, the core network device includes a plurality of network elements. Because a network architecture defined by the 3GPP is complex, when a user needs to transmit data, a complex process of interaction between the plurality of network elements in the core network device and the access network device is required, and signaling interaction is complex. In addition, because of the complex network architecture, subsequent operation and maintenance also result in high costs. Consequently, the network architecture defined by the 3GPP is quite complex for application in a vertical industry, and results in high investment and maintenance costs for enterprises. Therefore, how to reduce complexity of the 3GPP network architecture becomes an urgent problem to be resolved at present.

### SUMMARY

This application provides a network configuration method and a communications apparatus, to reduce complexity of a 3GPP network architecture, and achieve low complexity of the 3GPP network architecture and implement simple and flexible deployment and operation and maintenance.

According to a first aspect, a network configuration method is provided. The method may be performed by an AC, or may be performed by a chip applied to the AC. For example, the method is performed by the AC, and the method includes: The AC sends configuration status information to a first access point AP, where the configuration status information is used to perform network configuration on the first AP, and the first AP communicates with a terminal device by using a 3rd generation partnership project 3GPP access mode.

According to the network configuration method provided in the first aspect, the AC sends the configuration status information to the AP (the first AP). Network configuration may be performed based on the configuration status information sent by the AC. After performing network configuration, the AP may implement communication with the terminal device through a 3GPP air interface. This reduces complexity of a 3GPP network architecture, and ensures efficiency and quality of communication between the AP and the terminal device. In addition, deployment and operation and maintenance are relatively simple and flexible.

With reference to the first aspect, in some implementations of the first aspect, the configuration status information includes at least one piece of the following information: an identifier of the first AP, a name of the first AP, cell information of the first AP, a tracking area code TAC of the first AP, an enterprise network identifier of the first AP, a service provider identifier of the first AP, and information about a neighbor AP of the first AP.

The information about the neighbor AP of the first AP includes at least one piece of the following information: identifier information of the neighbor AP of the first AP, service information of the neighbor AP of the first AP, and capability information of the neighbor AP of the first AP. The service information includes at least one of a service network supported by the AP and a public land mobile network PLMN of the AP. The capability information includes at least one of a protocol supported by the AP, a data plane encapsulation capability and load of the AP. In this implementation, the AP may perform network configuration based on the configuration status information, to implement automatic deployment and configuration of the AP, and communicate with one or more terminal devices through the 3GPP air interface. This reduces complexity of the 3GPP network architecture, and further improves efficiency and quality of communication between the AP and the terminal device.

With reference to the first aspect, in some implementations of the first aspect, the method further includes: The AC receives a join request sent by the first AP, where the join request is used to request to join an AP managed by the AC; and the AC updates, based on the join request, network topology information managed by the AC. In this implementation, after a network topology changes, the AC may update a partial or an overall network topology structure, so that the network topology is more accurate for the AC to manage and maintain the AP, and for the AP or the AC to help a mobile terminal select a target cell. For example, resource allocation and the like may be adjusted based on an updated network topology structure, so that the network topology information is more accurate, and communication efficiency is further improved.

With reference to the first aspect, in some implementations of the first aspect, that the AC updates the network topology information includes: generating the information about the neighbor AP of the first AP; and/or updating information about a second AP, where the second AP is a neighbor AP of the first AP.

With reference to the first aspect, in some implementations of the first aspect, the method further includes: The AC receives a configuration status request sent by the first AP, where the configuration status request includes load information of the first AP; and the AC updates the information about the neighbor AP of the first AP based on the load information of the first AP. In this implementation, after load of the first AP changes, the AC may update the information about the neighbor AP of the first AP, that is, adjust the network topology structure, so that a network resource may be used in a balanced manner.

With reference to the first aspect, in some implementations of the first aspect, the configuration status request and the join request may be a same message, or may be different messages.

With reference to the first aspect, in some implementations of the first aspect, the method further includes: The AC sends a first configuration update request to the first AP, where the first configuration update request includes updated information about the neighbor AP of the first AP.

With reference to the first aspect, in some implementations of the first aspect, the method further includes: The AC sends a second configuration update request to the second AP, where the second AP is a neighbor AP of the first AP, and the second configuration update request includes updated information about a neighbor AP of the second AP.

According to a second aspect, a network configuration method is provided. The method may be performed by an AP, or may be performed by a chip applied to the AP. For example, the method is performed by the AP, and the method includes: An access point AP receives configuration status information sent by an access point controller AC, where the configuration status information is used to perform network configuration on the AP; and the AP performs network configuration based on the configuration status information, where the AP communicates with a terminal device by using a 3rd generation partnership project 3GPP access mode.

According to the network configuration method provided in the second aspect, the AP may perform network configuration based on the configuration status information sent by the AC. After performing network configuration, the AP may communicate with the terminal device through a 3GPP air interface. This reduces complexity of a 3GPP network architecture, and ensures efficiency and quality of communication between the AP and the terminal device. In addition, deployment and operation and maintenance are relatively simple and flexible.

With reference to the second aspect, in some implementations of the second aspect, the configuration status information includes at least one piece of the following information: an identifier of the AP, a name of the AP, cell information of the AP, a tracking area code TAC of the AP, an enterprise network identifier of the AP, a service provider identifier of the AP, and information about a neighbor AP of the AP. The information about the neighbor AP of the AP includes at least one piece of the following information: identifier information of the neighbor AP of the AP, service information of the neighbor AP of the AP, and capability information of the neighbor AP of the AP. The service information includes at least one of a service network supported by the AP and a public land mobile network PLMN of the AP. The capability information includes at least one of a protocol supported by the AP, a data plane encapsulation capability and load of the AP.

With reference to the second aspect, in some implementations of the second aspect, the method further includes: The AP sends a join request to the AC, where the join request is used by the AC to update network topology information managed by the AC. In this implementation, after a network topology changes, the AC may update a partial or an overall network topology structure, so that the network topology is more accurate for the AC to manage and maintain the AP, and for the AP or the AC to help a mobile terminal select a target cell. For example, resource allocation and the like may be adjusted based on an updated network topology structure, so that the network topology information is more accurate, and communication efficiency is further improved.

With reference to the second aspect, in some implementations of the second aspect, the method further includes: The AP sends a configuration status request to the AC, where the configuration status request includes load information of the AP. In this implementation, after load of the AP changes, the AP may send the load information to the AC, so that the AC may update the information about the neighbor AP of the first AP, and adjust the network topology structure. Therefore, a network resource is used in a balanced manner.

With reference to the second aspect, in some implementations of the second aspect, the configuration status information and a configuration update request may be a same message, or may be different messages.

With reference to the second aspect, in some implementations of the second aspect, the method further includes: The AP receives a first configuration update request sent by the AC, where the first configuration update request includes updated information about the neighbor AP of the AP, and the updated information about the neighbor AP of the AP is determined based on at least one of the network topology information managed by the AC and the load information of the AP; and the AP updates the information about the neighbor AP of the AP based on the first configuration update request. In this implementation, after receiving the first configuration update request, the AP may update the pre-stored information about the neighbor AP of the first AP. In this way, the updated information about the neighbor AP of the first AP is synchronized between the AC and the first AP.

With reference to the second aspect, in some implementations of the second aspect, the method further includes: The first AP sends first configuration update response information to the AC, used by the AC to determine that the first configuration update request is correctly received.

According to a third aspect, a communications apparatus is provided. The apparatus includes units or modules configured to perform the steps in the first aspect or any possible implementation of the first aspect.

According to a fourth aspect, a communications apparatus is provided. The apparatus includes units or modules configured to perform the steps in the second aspect or any possible implementation of the second aspect.

According to a fifth aspect, a communications apparatus is provided. The communications apparatus includes a processor, a memory, and a transceiver, configured to support the communications apparatus to execute a corresponding function in the foregoing methods. The processor, the memory, and the transceiver are in a communication connection. The memory stores instructions. The transceiver is configured to send or receive a specific signal when driven by the processor. The processor is configured to invoke the instructions to implement the network configuration method in the first aspect and the various implementations of the first aspect.

According to a sixth aspect, a communications apparatus is provided. The communications apparatus includes a processor, a memory, and a transceiver, configured to support the communications apparatus to execute a corresponding function in the foregoing methods. The processor, the memory, and the transceiver are in a communication connection. The memory stores instructions. The transceiver is configured to send or receive a specific signal when driven by the processor. The processor is configured to invoke the instructions to implement the network configuration method in the second aspect and the various implementations of the second aspect.

According to a seventh aspect, a communications apparatus is provided. The apparatus includes at least one processor and an interface circuit, and the at least one processor is configured to perform the method in the first aspect or any possible implementation of the first aspect.

According to an eighth aspect, a communications apparatus is provided. The apparatus includes at least one processor and an interface circuit, and the at least one processor is configured to perform the method in the second aspect or any possible implementation of the second aspect.

According to a ninth aspect, an access point controller is provided. The access point controller includes the communications apparatus provided in the third aspect, or the access point controller includes the communications apparatus provided in the fifth aspect, or the access point controller includes the communications apparatus provided in the seventh aspect.

According to a tenth aspect, an access point is provided. The access point includes the communications apparatus provided in the fourth aspect, or the access point includes the communications apparatus provided in the sixth aspect, or the access point includes the communications apparatus provided in the eighth aspect.

According to an eleventh aspect, a computer program product is provided. The computer program product includes a computer program. When being executed by a processor, the computer program is used to perform the method in the first aspect or any possible implementation of the first aspect, or perform the method in the second aspect or any possible implementation of the second aspect.

According to a twelfth aspect, a computer-readable storage medium is provided. The computer-readable storage medium stores a computer program. When being executed, the computer program is used to perform the method in the first aspect or any possible implementation of the first aspect, or perform the method in the second aspect or any possible implementation of the second aspect.

### BRIEF DESCRIPTION OF DRAWINGS

FIG. 1 is a schematic block diagram of an example of a wireless communications system architecture defined by the 3GPP;
FIG. 2 is a schematic block diagram of another example of a wireless communications system architecture defined by the 3GPP;
FIG. 3 is a schematic block diagram of still another example of a wireless communications system architecture defined by the 3GPP;
FIG. 4 is a schematic flowchart of establishing a CAPWAP tunnel for a wireless access point in a WLAN network architecture;
FIG. 5 is a schematic block diagram of a network architecture of a wireless local area network applicable to an embodiment of this application;
FIG. 6 is a schematic interaction diagram of an example of a network configuration method according to an embodiment of this application;
FIG. 7 is a schematic interaction diagram of another example of a network configuration method according to an embodiment of this application;
FIG. 8 is a schematic diagram of a network topology structure before a first AP joins an AP managed by an AC according to an embodiment of this application;
FIG. 9 is a schematic diagram of a network topology structure after a first AP joins an AP managed by an AC according to an embodiment of this application;
FIG. 10 is a schematic interaction diagram of still another example of a network configuration method according to an embodiment of this application;
FIG. 11 is a schematic interaction diagram of another example of a network configuration method according to an embodiment of this application;
FIG. 12 is a schematic diagram of a communications apparatus according to an embodiment of this application;
FIG. 13 is a schematic diagram of another communications apparatus according to an embodiment of this application;
FIG. 14 is a schematic diagram of a communications apparatus according to an embodiment of this application; and
FIG. 15 is a schematic diagram of another communications apparatus according to an embodiment of this application.

### DESCRIPTION OF EMBODIMENTS

The following describes technical solutions in this application with reference to the accompanying drawings.

The technical solutions in embodiments of this application may be applied to various communications systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WiMAX) communications system, a future 5th generation (5th generation, 5G) system, or a new radio (new radio, NR) system.

A terminal device in the embodiments of this application may be user equipment, an access terminal, a subscriber unit, a subscriber station, a mobile station, a mobile console, a remote station, a remote terminal, a mobile device, a user terminal, a terminal, a wireless communications device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in the embodiments of this application.

An access point (access point, AP) in the embodiments of this application may be an access network device. The access network device may be a device configured to communicate with the terminal device. The access network device may be a base transceiver station (base transceiver station, BTS) in the global system for mobile communications (global system for mobile communications, GSM) system or the code division multiple access (code division multiple access, CDMA) system, or may be a NodeB (NodeB, NB) in the wideband code division multiple access (wideband code division multiple access, WCDMA) system, or may be an evolved NodeB (evolved NodeB, eNB or eNodeB) or a home evolved NodeB (Home Evolved NodeB, HeNB) in the LTE system, or may be a radio controller in a cloud radio access network (cloud radio access network, CRAN) scenario. Alternatively, the network device may be a relay station, a vehicle-mounted device, a wearable device, a network device in the future 5G network, a network device in the future evolved PLMN network, or the like. This is not limited in the embodiments of this application. Specifically, the AP may be a wireless wide-band access point (Wide-band Access Point, WBAP).

An access point controller (access point controller, AC) in the embodiments of this application is configured to manage and control a plurality of APs. Specifically, the AC is configured for access control of a wireless network, forwarding and statistics, configuration and monitoring of the AP, roaming management, network management of the AP, security control, and the like. Specifically, the AC may be a wireless wide-band access point controller (Wide-band Access Point Controller, WBAC). The AC may correspond to a core network device.

In the embodiments of this application, the terminal device, the access point, or the access point controller includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more computer operating systems, for example, a Linux operating system, a Unix operating system, an Android operating system, an iOS operating system, or a Windows operating system, that implement service processing by using a process (process). The application layer includes applications such as a browser, an address book, word processing software, and instant messaging software. In addition, a specific structure of an execution body of a method provided in the embodiments of this application is not specifically limited in the embodiments of this application, provided that a program that records code for the method provided in the embodiments of this application can be run to perform communication according to the method provided in the embodiments of this application. For example, the method provided in the embodiments of this application may be performed by a terminal device, a network device, or a functional module that is in a terminal device or a network device and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to a magnetic storage component (for example, a hard disk, a floppy disk, or a magnetic tape), an optical disc (for example, a compact disc (compact disc, CD), or a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable medium" may include but is not limited to a radio channel, and various other media that can store, contain, and/or carry instructions and/or data.

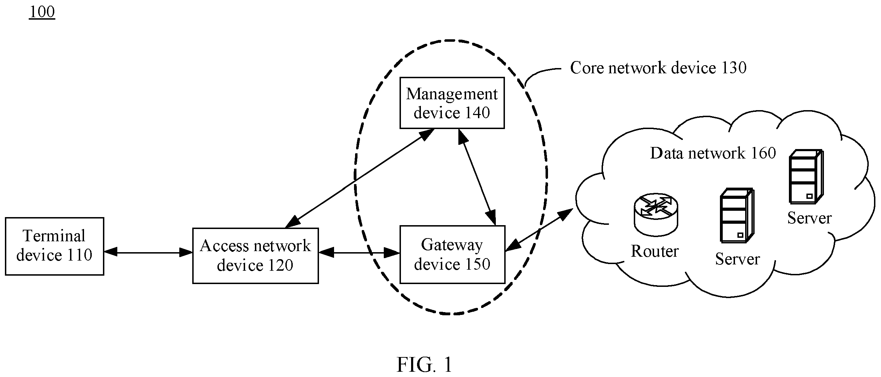

FIG. 1 is a schematic block diagram of a wireless communications system architecture 100 defined by the 3rd generation partnership project (3rd generation partnership project, 3GPP). As shown in FIG. 1, the system architecture 100 includes a terminal device 110, an access network device 120, a core network device 130, and a data network 160 (data network, DN). The core network device 130 includes a management device 140 and a gateway device 150. In FIG. 1, the terminal device 110 may be configured to connect, through a wireless air interface, to the access network device 120 deployed by an operator, and then connect to the data network by using the core network device 130. The access network device 120 is mainly configured to implement functions such as a radio physical layer function, resource scheduling and radio resource management, radio access control, and mobility management. The access network device may be the foregoing network device. The core network device 130 may include the management device 140 and the gateway device 150. The management device 140 is mainly configured to perform device registration, security authentication, mobility management, location management, and the like of the terminal device. The gateway device 150 is mainly configured to: establish a channel with the terminal device, and forward a data packet between the terminal device and an external data network through the channel. The data network 160 may correspond to a plurality of different service domains, such as an IP multimedia subsystem (IP multimedia subsystem, IMS), an internet (Internet), an internet protocol television (internet protocol television, IPTV), and another operator service domain, and is mainly configured to provide a plurality of data services for the terminal device. The data network 160 may include network devices such as a server (including a server providing a multicast service), a router, and a gateway. FIG. 1 is merely a diagram of an example architecture. In addition to functional units shown in FIG. 1, the network architecture may further include another functional unit or functional entity. This is not limited in this embodiment of this application.

When a communications network shown in FIG. 1 is a 5G network, the foregoing terminal device may be user equipment (user equipment, UE), for example, a mobile phone or a computer, or may be a cellular phone, a cordless phone, a session initiation protocol (session initiation protocol, SIP) phone, a smartphone, a wireless local loop (wireless local loop, WLL) station, a personal digital assistant (personal digital assistant, PDA), a computer, a laptop computer, a handheld communications device, a handheld computing device, a satellite wireless device, a wireless modem card, a television set-top box (set top box, STB), a customer premises equipment (customer premise equipment, CPE), and/or another device configured to communicate on a wireless system. The access network device may be an/a access network (access network, AN)/radio access network (radio access network, RAN) device, or a network including a plurality of 5G-AN/5G-RAN nodes. The 5G-AN/5G-RAN node may be an access point (access point, AP), a next generation NodeB (NR nodeB, gNB), a gNB in which a central unit (central unit, CU) is separated from a distributed unit (distributed unit, DU), an HeNB, a transmission reception point (transmission receive point, TRP), a transmission point (transmission point, TP), or another access node. The foregoing core network device may include functional units such as an access and mobility management function (access & mobility function, AMF), a session management function (session management function, SMF), a policy control function (policy control function, PCF), and a user plane function (user plane function, UPF). The functional units may work independently, or may be combined together to implement some control functions. For example, the AMF, the SMF, and the PCF may be combined together as a management device to implement access control and mobility management functions such as access authentication, security encryption, and location registration of a terminal device, session management functions such as establishment, release, and change of a user plane transmission path, and functions of analyzing slice(slice)-related data (such as congestion) and terminal device―related data. The UPF, as a gateway device, mainly implements functions such as routing and forwarding of user plane data, for example, filtering data packets of a terminal device, transmitting/forwarding data, controlling a rate, and generating charging information.

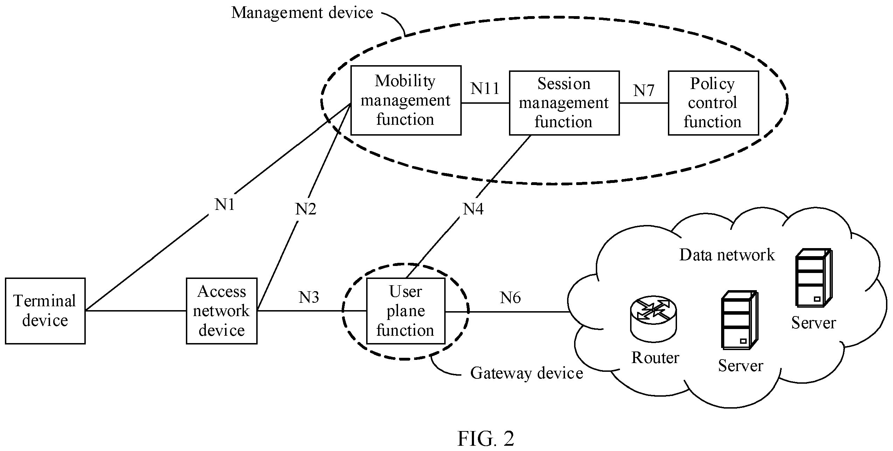

FIG. 2 is a schematic diagram of a 5G network architecture defined by the 3GPP. In the 5G network architecture shown in FIG. 2, functional units may establish a connection through a next generation (next generation, NG) network interface to implement communication. For example, a terminal device establishes an air interface connection with a RAN device through a new radio (new radio, NR) interface, to transmit user plane data and control plane signaling. The terminal device may establish a control plane signaling connection with an AMF through an NG interface 1 (N1 for short). An/A AN/RAN device such as a next generation radio access NodeB (NR NodeB, gNB) may establish a user plane data connection with a UPF through an NG interface 3 (N3 for short). The AN/RAN device may establish a control plane signaling connection with the AMF through an NG interface 2 (N2 for short). The UPF may establish a control plane signaling connection with an SMF through an NG interface 4 (N4 for short). The UPF may exchange user plane data with a data network through an NG interface 6 (N6 for short). The AMF may establish a control plane signaling connection with the SMF through an NG interface 11 (N11 for short). The SMF may establish a control plane signaling connection with a PCF through an NG interface 7 (N7 for short). An air interface shown in FIG. 2 may also be referred to as a 3GPP air interface.

It should be noted that, FIG. 2 is merely a diagram of an example architecture. In addition to functional units shown in FIG. 2, the network architecture may further include another functional unit or functional entity. For example, a core network device may further include another functional unit such as a unified data management (unified data management, UDM) function. This is not limited in the embodiments of this application.

When the communications network shown in FIG. 1 is a 4G network, for the terminal device, refer to related descriptions of the terminal device in FIG. 2. Details are not described herein again. The access network device may be a NodeB (nodeB, NB), an evolved NodeB (evolution nodeB, eNB), an HeNB, a TRP, a TP, an AP, or another access unit. The core network device may include management devices such as a mobility management entity (mobility management entity, MME) and a policy and charging rules function (policy and charging rules function, PCRF), and gateway devices such as a serving gateway (serving gateway, SGW), a packet data network gateway (packet data network gateway, PGW), and a local gateway (local gateway, LGW).

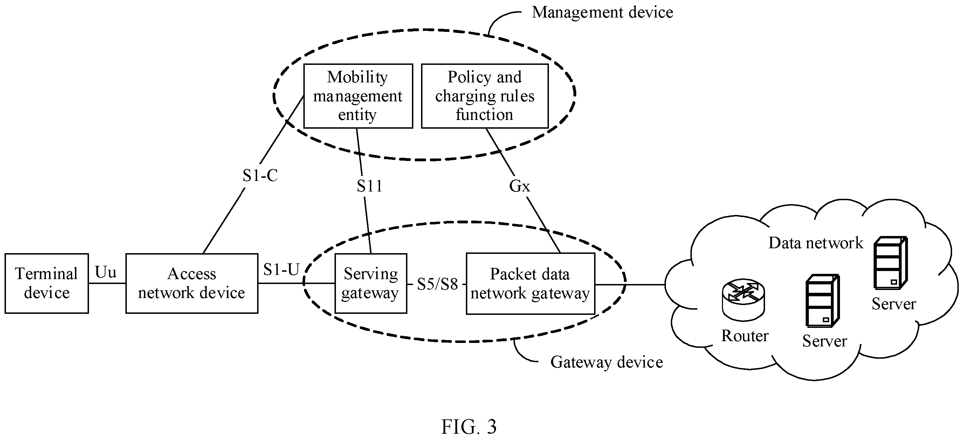

FIG. 3 is a schematic diagram of a 4G network architecture defined by the 3GPP. For example, in the 4G network architecture shown in FIG. 3, a terminal device may establish an air interface connection with an eNB through a Uu interface, the eNB establishes a control plane signaling connection with an MME through an S1-C interface, the eNB establishes a user plane data connection with an SGW through an S1-U interface, the SGW establishes a control plane signaling connection with the MME through an S11 interface, the SGW establishes a user plane data connection with a PGW through an S5/S8 interface, and the PGW is connected to a data network through an SGi interface. Each air interface shown in FIG. 3 may also be referred to as a 3GPP air interface.

It should be noted that, FIG. 3 is merely a diagram of an example architecture. In addition to functional units shown in FIG. 3, the network architecture may further include another functional unit or functional entity. This is not limited in this embodiment of this application.

It can be learned that a network architecture defined by the 3GPP is complex, especially when a user needs to obtain network data, a complex process of interaction between a plurality of network elements in the core network device and the access network device is required, and signaling interaction is complex. In addition, because of the complex network architecture, subsequent operation and maintenance also result in high costs. Consequently, the current network architecture defined by 3GPP is quite complex for application in a vertical industry (for example, a manufacturing factory, a farm, or warehousing and logistics), and results in high investment and maintenance costs for enterprises.

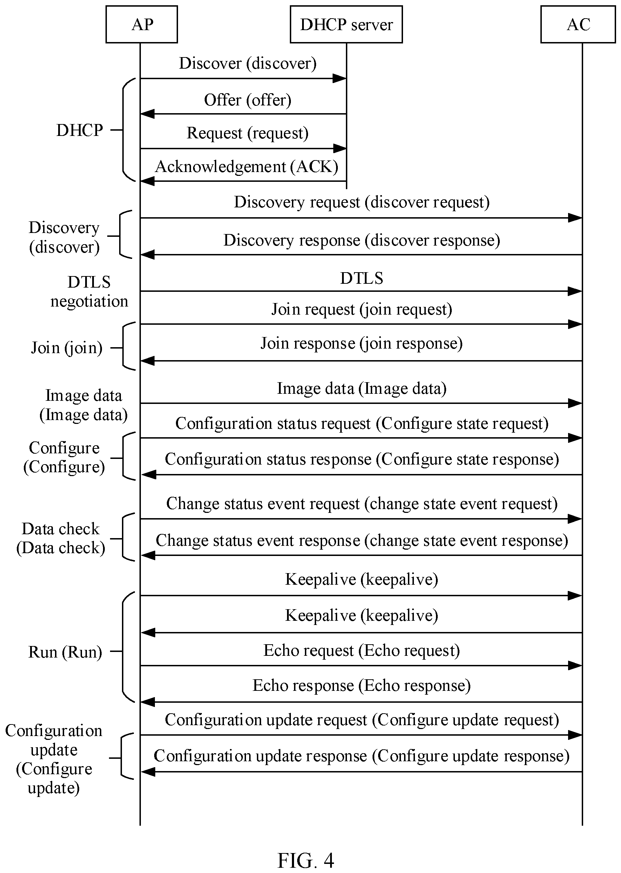

In a wireless local area network (wireless local area networks, WLAN), the WLAN integrates a thin AP and AC architecture/protocol, and supports plug-and-play. Therefore, deployment and operation and maintenance are simple and flexible. An AC is responsible for access control of a wireless network, forwarding and statistics, configuration and monitoring of an AP, roaming management, network management of the AP, and security control. The thin AP is responsible for simple functions such as encryption and decryption of an 802.11 packet, a physical layer (physical layer, PHY) function of 802.11, management by the AC, and statistics of a radio frequency (radio frequency, RF) air interface. The AC manages a plurality of APs, and the AP communicates with the AC by using a control and provisioning of wireless access points (control and provisioning of wireless access points, CAPWAP) protocol, so that a wireless access packet is processed by both the AP and the AC. FIG. 4 is a schematic flowchart of establishing a CAPWAP tunnel for a wireless access point in a WLAN network architecture. Each AP may manage a plurality of terminal devices and communicate with the plurality of terminal devices. As shown in FIG. 4, a process of establishing the CAPWAP tunnel mainly includes:
a dynamic host configuration protocol (dynamic host configuration protocol, DHCP) phase;
an AC discovery (Discovery) phase;
a datagram transport layer security (datagram transport layer security, DTLS) negotiation phase;
an AC join (Join) phase;
an image data (Image data) phase;
a configure (Configure) phase;
a data check (Data check) phase;
a data run (Run) phase; and
a configure update (Configure update) phase.

After several phases of signaling interaction, a tunnel between the AP and the AC is successfully established, and the AP can communicate with the AC.

The WLAN network architecture is simple and includes few network elements. Deployment and operation and maintenance are relatively simple and flexible. In the WLAN architecture, multi-user resource scheduling is a manner based on resource competition (collision) between a plurality of users. Consequently, a capacity of the user in the WLAN architecture is limited, and interference between the users is relatively large. However, in a 3GPP architecture (3GPP air interface), the multi-user resource scheduling manner is a manner in which a network device allocates resources to the plurality of users in a unified manner rather than a manner in which the plurality of users compete for the resources. Therefore, in the 3GPP architecture, the user has a relatively large capacity, interference between the users is small, and resource efficiency is high. In the WLAN architecture, mobility performance of the user is relatively poor. The user switches a mobile network in a reconnection manner. To be specific, when the user switches from network coverage of an AP to network coverage of another AP, a network needs to be disconnected, and then reconnected. Therefore, mobile switching performance of the user is relatively poor. However, in the 3GPP architecture, the user has a complete inter-cell switching mechanism, and the user does not need to disconnect a network when performing inter-cell switching. Therefore, mobile switching performance of the user is relatively good.

Because the network architecture defined by the 3GPP is relatively complex, how to reduce complexity of the 3GPP network architecture becomes an urgent problem to be resolved at present.

Based on the foregoing problems, this application provides a network configuration method in which a WLAN architecture is applied to a 3GPP network architecture, to reduce complexity of the 3GPP network architecture, and achieve low complexity of the 3GPP network architecture and implement simple and flexible deployment and operation and maintenance.

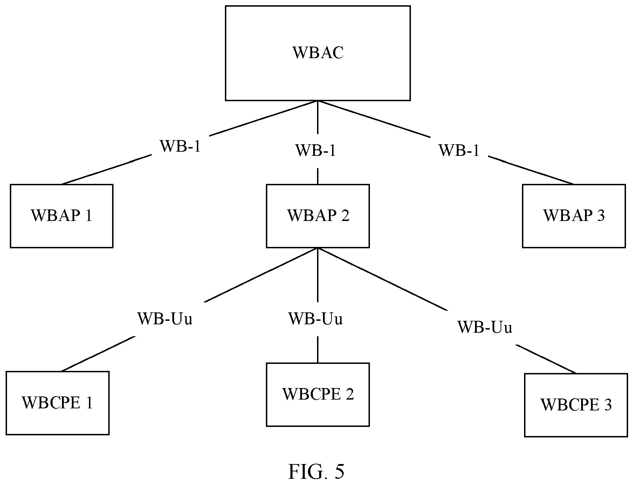

FIG. 5 is a schematic diagram of a network architecture of a wireless local area network applicable to an embodiment of this application. As shown in FIG. 5, the network architecture includes an AC, at least one AP, and a plurality of user equipments. In FIG. 5, the following provides description by using an example in which the AC is a WBAC, the AP is a WBAP, and the user equipment is a wide-band customer premises equipment (wide-band customer premises equipment, WBCPE). For example, the WBCPE may be a telephone set, a cable television set-top box, a user digital line router, or the like.

As shown in FIG. 5, the WBCPE and the WBAP are connected through a WB-Uu interface. The WB-Uu interface is similar to an LTE-Uu air interface in the 3GPP. The WBCPE supports a non-access stratum (non-access stratum, NAS) message defined by the 3GPP, and the NAS message is terminated by the WBAP.

The WBAP is equivalent to an access point device. The WBAP supports the WB-Uu interface between the WBAP and the WBCPE, and supports a WB-1 interface between the WBAP and the WBAC. The WBAP terminates air interface signaling and the NAS message. The WBAP provides an access management function, an authentication function, a local mobility management function, and a session management function of the WBCPE. The WBAP, as a network connection point between an egress gateway of data connection for local forwarding and an external public data network (public data network, PDN), may serve as an anchor point for data connection when the WBCPE moves. One WBAP may provide a network access service or the like for one or more WBCPEs. As shown in FIG. 5, a WBAP 2 may provide a network access service or the like for three WBCPEs.

The WBAC supports the WB-1 interface between the WBAC and the WBAP. The WBAC provides a user subscription, storage and management function, a mobility management function, a policy control function, a WBAP configuration management function, and the like. The WBAC, as a network connection point between an egress gateway of data connection for centralized forwarding and an external PDN, may serve as another anchor point for data connection when the WBCPE moves. One WBAC can manage and control one or more WBAPs. As shown in FIG. 5, the WBAC can manage and control three WBAPs.

It should be understood that FIG. 5 is merely an example, and should not limit the network architecture of the wireless local area network that is applicable to this application. For example, the network architecture may further include more WBAPs, WBCPEs, and the like. Each WBAC can manage and control a plurality of WBAPs, and one WBAP may provide a network access service or the like for a plurality of WBCPEs. This is not limited in this embodiment of this application.

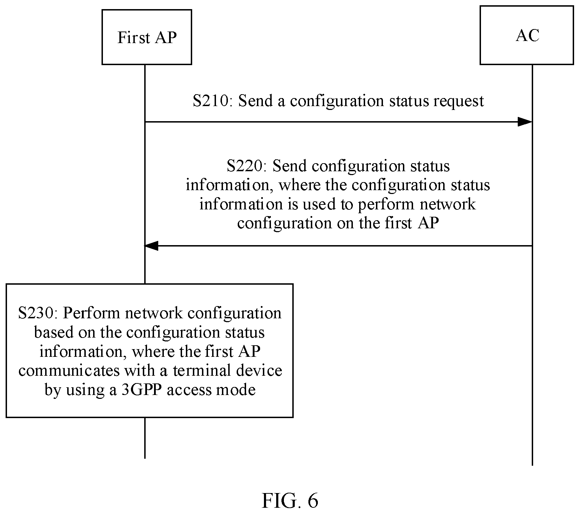

The following describes in detail a network configuration method provided in this application with reference to FIG. 6. FIG. 6 is a schematic interaction diagram of a network configuration method 200 according to an embodiment of this application. The method 200 may be applied to the scenario shown in FIG. 5, or may be applied to another communication scenario. This is not limited in this embodiment of this application.

It should be understood that in this embodiment of this application, the following describes the method in each embodiment by using an example in which the method in each embodiment is performed by an AC and an AP. As an example instead of a limitation, the method may alternatively be performed by a chip applied to the AC and a chip applied to the AP.

As shown in FIG. 6, the method 200 shown in FIG. 6 may include step S210 to step S230. The following describes the steps in the method 200 in detail with reference to FIG. 6.

S210: A first AP sends a configuration status request to an AC, where the configuration status request includes information about the first AP.

S220: The AC sends configuration status information to the first AP based on the information about the first AP, where the configuration status information is used to perform network configuration on the first AP.

S230: The first AP performs network configuration based on the configuration status information, and the first AP communicates with a terminal device by using a 3GPP access mode.

Specifically, the AC can manage and control a plurality of APs. The AC may be responsible for access control of a wireless network, forwarding and statistics, configuration and monitoring of the AP, roaming management, network management of the AP, and security control. The AP may be responsible for simple functions such as encryption and decryption of a packet, a PHY function, management by the AC, and statistics of an RF air interface. Before step S210, the first AP may implement a function of discovering the AC, and may establish a session (establish a connection) with the AC by using the procedure shown in FIG. 4. After the connection is established between the first AP and the AC, in step S210, the first AP may send the configuration status request (configure status request) to the AC, where the configuration status request includes the information about the first AP. The first AP may be any one of the plurality of APs managed and controlled by the AC, or an AP that is newly added to the AC and that is managed and controlled by the AC.

It should be understood that step S210 is optional. For example, after the AC has obtained the information about the first AP (for example, the first AP is included in the plurality of APs managed and controlled by the AC), the first AP may not need to send the configuration status request to the AC. To be specific, the first AP may not perform S210, and the AC may directly perform S220. In other words, in some embodiments of this application, the method 200 may include only steps S220 and S230, and not include step S210.

The information about the first AP may include information such as an identifier of the first AP, a radio air interface status (radio administrative status) of the first AP, and an interval (statistics timer) for reporting the radio air interface status of the first AP. Optionally, the information about the first AP may further include other information related to the first AP. This is not limited in this embodiment of this application.

In S220, the AC may generate (determine) the configuration status information based on at least one of the configuration status request, a policy configured by an operator/enterprise, and a local policy of the AC, and send the configuration status information (which may also be referred to as configuration status response (configure status response) information) to the first AP. The configuration status information is used to perform network configuration on the first AP. The policy configured by the operator/enterprise and the local policy of the AC may be preconfigured by the AC.

In S230, after receiving the configuration status information, the first AP performs network configuration based on the configuration status information. After performing network configuration, the first AP may communicate with the AC and the terminal device. After performing network configuration, the first AP may establish a connection with one or more terminal devices and communicate with the one or more terminal devices by using the 3GPP access mode. To be specific, the first AP performs data transmission, resource scheduling, mobility switching, and the like with the one or more terminal devices through a 3GPP air interface. The 3GPP access mode may be understood as a 3GPP standard or the 3GPP air interface, for example, LTE or NR defined by the 3GPP. The first AP communicates with one or more endpoints devices through the 3GPP air interface, to ensure efficiency and quality of communication between the first AP and the terminal device.

According to the network configuration method provided in this application, the AP (the first AP) may perform network configuration based on the configuration status information sent by the AC. After performing network configuration, the AP may communicate with the terminal device through the 3GPP air interface. This reduces complexity of a 3GPP network architecture, and ensures efficiency and quality of communication between the AP and the terminal device. In addition, deployment and operation and maintenance are relatively simple and flexible.

In some embodiments, the configuration status information may include at least one piece of the following information: an identifier of the first AP, a name of the first AP, cell information of the first AP, a tracking area code (tracking area code, TAC) of the first AP, an enterprise network identifier of the first AP, a service provider identifier of the first AP, and information about a neighbor AP of the first AP.

The information about the neighbor AP of the first AP includes at least one piece of the following information: identifier information of the neighbor AP of the first AP, service information of the neighbor AP of the first AP, and capability information of the neighbor AP of the first AP.

The service information includes at least one of a service network supported by the AP and a public land mobile network PLMN of the AP.

The capability information includes at least one of a protocol supported by the AP, a data plane encapsulation capability and load of the AP.

Specifically, in S220, the configuration status information sent by the AC to the first AP may include one or more of the identifier (identity, ID) of the first AP, the name of the first AP, the cell information of the first AP, the TAC of the first AP, the enterprise network identifier of the first AP, the service provider identifier of the first AP, and the information about the neighbor AP of the first AP.

The identifier of the first AP and the name of the first AP are used to uniquely identify the first AP. The cell information of the first AP is used to indicate network coverage, equivalent to a cell of a network device defined by the 3GPP, of the first AP. For example, the cell information of the first AP may include an identifier of the cell, a time-frequency resource range of the cell, and the like. The TAC of the first AP defines the tracking area code to which a cell of the first AP belongs. One tracking area (tracking area, TA) may cover one or more cells, but one cell can belong to only one tracking area. The tracking area is an area used for paging and location update. For example, when a terminal device in idle status needs to be paged, paging may be performed in all cells in a tracking area with which the terminal device is registered.

The enterprise network identifier of the first AP is an identifier of an enterprise network to which the first AP belongs, for example, a non-public network identifier (non-public network identity, NPN ID) or a neutral host network identifier (neutral host network identity, NHN ID).

The service provider identifier of the first AP is a service provider identifier of an access service that can be provided by the first AP, for example, a participating service provider identifier (participating service provider identity, PSP ID) or a service provider identifier (service provider identity, SP ID).

The information about the neighbor AP of the first AP may include at least one of the identifier information of the neighbor AP of the first AP, the service information of the neighbor AP of the first AP, and the capability information of the neighbor AP of the first AP. The neighbor AP of the first AP may be an AP that has a neighbor relationship (neighbour relation) with the first AP. For example, when cells or tracking areas (tracking area, TA) corresponding to two APs are neighbor to each other, the two APs have a neighbor relationship.

The service information of the AP includes one or more of service networks supported by the AP and public land mobile networks (public land mobile network, PLMN) having a roaming relationship with the AP. The service network supported by the AP is a service network, of an access service, provided by the AP, for example, a service provider PSP or SP. This is not limited in this embodiment of this application.

The capability information of the AP includes one or more of protocols supported by the AP, data plane encapsulation capabilities and load of the AP.

The protocol supported by the AP may include a protocol supported by communication between the AP and the AC, for example, a general data transfer platform (general data transfer platform, GTP) protocol, a generic routing encapsulation (generic routing encapsulation, GRE) protocol, or a CAPWAP protocol. This is not limited in this application.

The data plane encapsulation capability of the AP may include at least one of the following parameters: a protocol for data plane encapsulation between the AP and the AC, a format of the data plane encapsulation between the AP and the AC (including a parameter setting, a value, or the like in a data plane encapsulation packet header), an encryption capability for data plane encapsulation between the AP and the AC, and the like. This is not limited in this embodiment of this application.

The load of the AP may include an amount of data transmitted by the AP, a quantity of terminal devices that communicate with the AP, resource usage of a cell covered by the AP, and the like.

It should be understood that, the configuration status information, except the foregoing configuration information (the configuration parameters) defined by the 3GPP, may further include other configuration information or another configuration parameter defined by the 3 GPP. This is not limited in this embodiment of this application.

The first AP may perform network configuration based on the configuration status information, to implement automatic deployment and configuration of the first AP, and communicate with one or more terminal devices through the 3GPP air interface. This reduces complexity of the 3GPP network architecture, and further improves efficiency and quality of communication between the first AP and the terminal device.

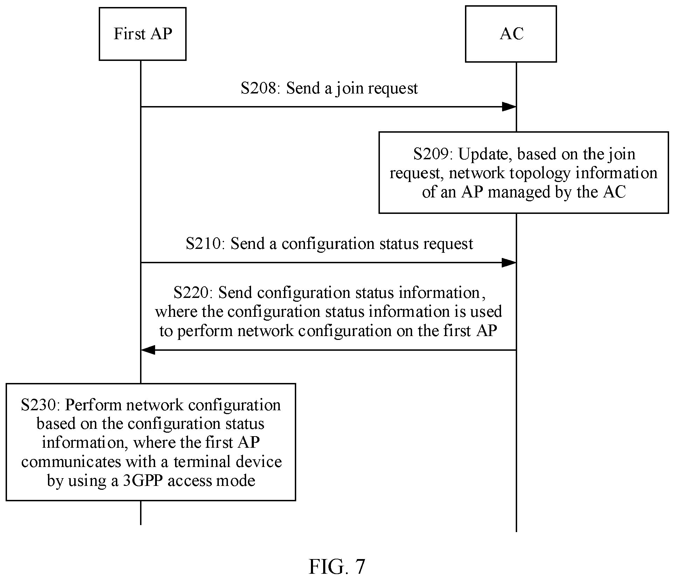

FIG. 7 is a schematic interaction diagram of a network configuration method according to some embodiments of this application. In some embodiments, based on the method steps shown in FIG. 6, the method 200 further includes the following steps.

S208: The first AP sends a join request to the AC, where the join request is used to request to join an AP managed by the AC. Correspondingly, the AC receives the join request sent by the first AP.

S209: The AC updates, based on the join request, network topology information of the AP managed by the AC.

Specifically, for descriptions of steps S210 to S230 shown in FIG. 7, refer to descriptions of steps S210 to S230 in FIG. 6. For brevity, details are not described herein again. In this case, the AC may generate (determine) the configuration status information of the first AP based on at least one of updated network topology information (refer to descriptions in S209), the join request of the first AP, the configuration status request, the policy configured by the operator/enterprise, and the local policy of the AC.

In S208, after discovering the AC, the first AP may send the join request (join request) to the AC. The join request is used to request to join the AP managed by the AC. The AC manages one or more APs. The join request may carry information such as the identifier of the first AP. In S209, the AC updates, based on the join request, the network topology information of the AP managed by the AC. The network topology information (or may be referred to as a "network topology structure") may be understood as a physical layout of a network element, and may include at least one of the following: information about neighbor APs, a specific connection relationship between neighbor APs, information about a cell covered by an AP, a correspondence between an AP and a TA, information about a terminal device corresponding to an AP, and the like. The AC may update, based on the join request of the first AP, the network topology information of the AP managed by the AC.

In some embodiments, in step S209, that the AC updates the network topology information includes:
generating the information about the neighbor AP of the first AP; and/or
updating information about a second AP, where the second AP is a neighbor AP of the first AP.

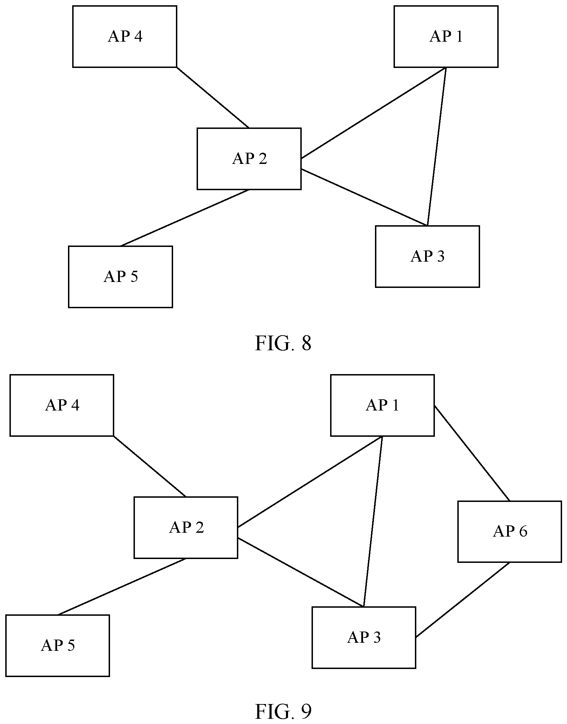

Specifically, after the first AP newly joins the AP managed by the AC, the AC may generate information about the neighbor AP of the first AP. For example, FIG. 8 is a schematic diagram of a network topology structure before the first AP joins the AP managed by the AC. A connection between two APs in FIG. 8 indicates that the two APs are neighbor APs. It is assumed that before the first AP registers with the AC (before the first AP joins the AP managed by the AC), APs managed by the AC include an AP 1 to an AP 5. After the first AP registers with the AC (after the first AP joins the AP managed by the AC), APs managed by the AC include six APs. FIG. 9 is a schematic diagram of a network topology structure after the first AP joins the AP managed by the AC. It is assumed that the first AP is an AP 6, and neighbor APs of the AP 6 are the AP 1 and the AP 3. In this case, the AC may generate the information about the neighbor AP of the first AP. The neighbor APs of the first AP are the AP 1 and the AP 3, that is, the AC may generate information about the AP 1 and the AP 3. The information about the AP 1 and the AP 3 may include one or more of identifier information of the AP 1 and the AP 3, service information of the AP 1 and the AP 3, and capability information of the AP 1 and the AP 3. In addition, the information about the AP 1 and the AP 3 is carried in the configuration status information and notified to the first AP.

Because the first AP newly joins the AP and original positions and connection relationships between the AP 1 to the AP 5 may change, in addition to generating the information about the neighbor AP of the first AP, the AC may further update the information about the second AP, where the second AP is a neighbor AP of the first AP. For example, as shown in FIG. 8, before the first AP joins the AP, the AP 1, the AP 2, and the AP 3 are neighbor APs. After the first AP (the AP 6) joins the AP, as shown in FIG. 9, the network topology structure changes, and the AP 1, the AP 3, and the first AP are neighbor APs. To be specific, information about neighbor APs of the AP 1 and the AP 3 changes. Therefore, the AC further needs to update the information about the neighbor APs of the AP 1 and the AP 3. For example, the information about the neighbor AP of the AP 1 and the information about the neighbor AP of the AP 3 both need to be updated. Before the first AP (the AP 6) joins the AP, neighbor APs of the AP 3 are the AP 1 and the AP 2. After the first AP joins the AP, neighbor APs of the AP 3 become the AP 1, the AP 2, and the AP 6, where the AP 3 is a neighbor AP of the first AP. In other words, the AC may further update the information about the second AP, where the information about the second AP includes information about a neighbor AP of the second AP and the like. In the example shown in FIG. 9, the second AP may include the AP 1 and the AP 3.

The information about the neighbor AP of the first AP and the information about the second AP may be implemented in a form of an information table. For example, the information about the neighbor AP of the first AP may be an information table (neighbour relation table) of the neighbor AP of the first AP. Specific implementation forms of the information about the neighbor AP of the first AP and the information about the second AP are not limited in this application.

It should be understood that FIG. 8 and FIG. 9 are merely examples, and should constitute no limitation on the embodiments of this application. For example, the AC may further manage more APs, and a connection relationship between APs may be another connection relationship or the like. This is not limited in this embodiment of this application.

It should be understood that, in this embodiment of this application, because the first AP newly joins the AP, a partial or an overall network topology structure may change. After a network topology changes, the AC, in addition to updating the information about the neighbor AP of the first AP, may update the partial or overall network topology structure, so that the network topology is more accurate for the AC to manage and maintain the AP, and for the AP or the AC to help a mobile terminal device select a target cell. For example, resource allocation and the like may be adjusted based on an updated network topology structure, so that the network topology information is more accurate, and communication efficiency is further improved.

It should be understood that, in this embodiment of this application, the configuration status request and the join request that are sent by the first AP may be a same message. To be specific, the parameters included in the configuration status request and the join request are sent in a same piece of signaling (message), where the signaling includes content included in the configuration status request and the join request. It is clear that the configuration status request and the join request may alternatively be sent in different messages. The AC may determine the configuration status information based on at least one piece of the following information: information in the configuration status request sent by the first AP, information in the join request, the policy configured by the operator/enterprise, the local policy of the AC, and the like. This is not limited in this embodiment of this application.

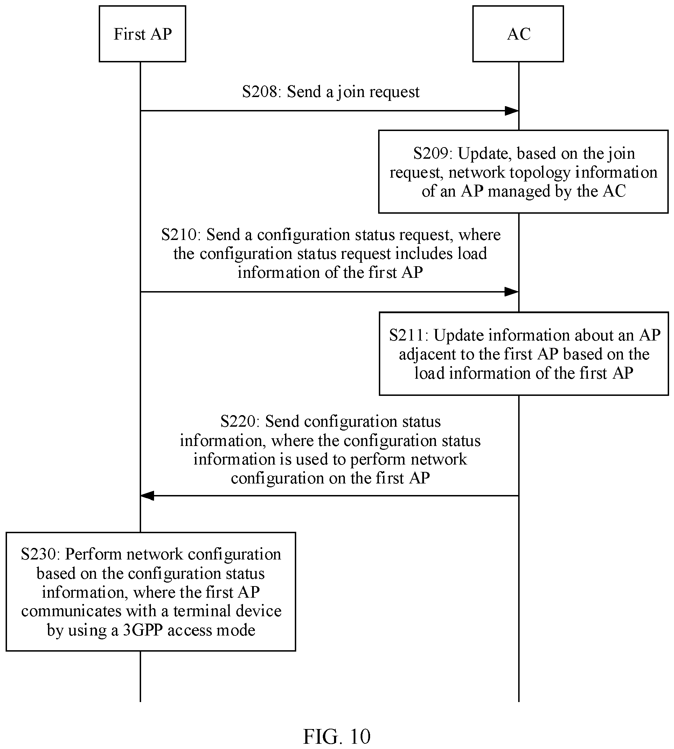

In step S210, when the configuration status request sent by the first AP to the AC further includes load information of the first AP, FIG. 10 is a schematic interaction diagram of a network configuration method according to some embodiments of this application. In some embodiments, based on the method steps shown in FIG. 7, the method 200 further includes the following step.

S211: The AC updates, based on the load information of the first AP, the information about the neighbor AP of the first AP.

Specifically, for descriptions of steps S208 to S230 shown in FIG. 10, refer to descriptions of steps S210 to S230 in FIG. 7. For brevity, details are not described herein again.

After joining the AP managed by the AC and performing network configuration, the first AP may communicate with a terminal device connected to the first AP. When the configuration status request further includes the load information of the first AP, in S211, the AC may further update the information about the neighbor AP of the first AP based on the load information of the first AP, the network topology information of the AP managed by the AC, and load information of another AP managed by the AC. The load information of the first AP may be understood as network load of the first AP. For example, the load information of the first AP may include a quantity of terminal devices that communicate with the first AP, resource usage of a cell covered by the first AP, a network congestion degree, and the like. When a load amount of the first AP is relatively large, for example, when a large quantity of terminal devices communicate with the first AP, the resource usage of the cell covered by the first AP is relatively large, and a network is severely congested, the AC may update the information about the neighbor AP of the first AP, that is, adjust the network topology structure. After the load of the first AP changes, the AC needs to readjust the network topology structure of the AP, so that a network resource is used in a balanced manner.

For example, it is assumed that the original AP 1 and AP 3 are neighbor APs of the first AP. After the load amount of the first AP increases, a relatively large difference exists between the load amount of the first AP and load amounts of the AP 1 and the AP 3, and the first AP is no longer suitable to be a neighbor AP of the AP 1 and the AP 3. Therefore, the AC re-determines a neighbor AP for the first AP based on the load information of the first AP, the network topology information of the AP managed by the AC, and the load information of another AP managed by the AC. To be specific, the AC updates the information about the neighbor AP of the first AP, and readjusts the network topology structure. It is assumed that updated neighbor APs of the first AP are the AP 4 and the AP 5, and updated information about the neighbor APs of the first AP is information about the AP 4 and the AP 5.

It should be understood that, when the configuration status request includes the load information of the first AP, the information about the neighbor AP of the first AP included in the configuration status information may be information about the neighbor AP of the first AP that is updated based on the load information of the first AP. It is clear that the information about the neighbor AP of the first AP included in the configuration status information may alternatively be the information about the neighbor AP of the first AP that is not updated based on the load information of the first AP.

In some other possible implementations, the first AP may further notify the AC of the load information of the first AP by using other signaling. In other words, the configuration status request may alternatively not include the load information of the first AP. This is not limited in this embodiment of this application.

When the information about the neighbor AP of the first AP that is included in the configuration status information sent by the AC to the first AP is the information about the neighbor AP of the first AP that is not updated,

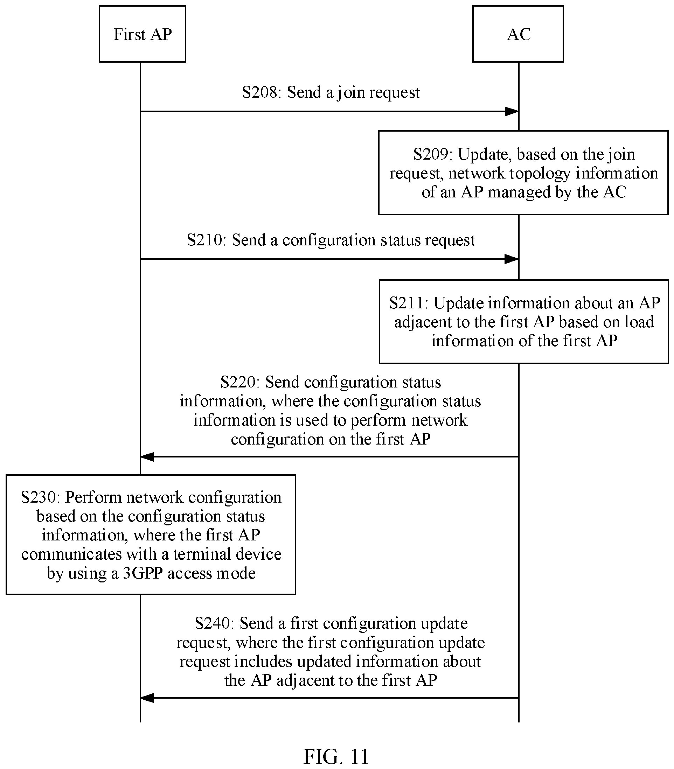

FIG. 11 is a schematic interaction diagram of a network configuration method according to some embodiments of this application. In some embodiments, based on the method steps shown in FIG. 10, the method 200 further includes the following step.

S240: The AC sends a first configuration update request to the first AP, where the first configuration update request includes the updated information about the neighbor AP of the first AP. Correspondingly, the first AP receives the first configuration update request sent by the AC.

Specifically, for descriptions of steps S208 to S230 shown in FIG. 11, refer to descriptions of steps S208 to S230 in FIG. 10. For brevity, details are not described herein again.

After the AC updates the information about the neighbor AP of the first AP based on the load information of the first AP, the network topology information of the AP managed by the AC, and the load information of another AP managed by the AC, the AC may send, to the first AP, the updated information about the neighbor AP of the first AP through the first configuration update request (configure update request). After receiving the first configuration update request, the first AP may update the pre-stored information about the neighbor AP of the first AP. In this way, the updated information about the neighbor AP of the first AP is synchronized between the AC and the first AP, and a network resource is used in a balanced manner. Optionally, the updated information about the neighbor AP of the first AP may be implemented in a form of a table.

It should be understood that, in this embodiment of this application, the configuration status information and the first configuration update request that are sent by the AC to the first AP may be a same message. To be specific, the configuration status information and the first configuration update request are sent in a same piece of signaling (message), where the signaling includes content included in the configuration status information and the first configuration update request. It is clear that the configuration status information and the first configuration update request may alternatively be sent in different messages (signaling). This is not limited in this embodiment of this application.

Optionally, after receiving the first configuration update request sent by the AC, the first AP may further send first configuration update response (configure update response) information to the AC, used by the AC to determine that the first configuration update request is correctly received.

The information about the neighbor AP of the first AP is updated based on the load information of the first AP, to update and adjust the partial or overall network topology structure. Therefore, the network topology information is more accurate, and communication efficiency and communication quality are further improved.

In an embodiment, when the first AP newly joins the AP managed by the AC, the network topology structure of the AP managed by the AC changes. The AC further needs to update the information about the neighbor AP of the first AP. It is assumed that the second AP is the neighbor AP of the first AP, and there may be a plurality of second APs, or may be one second AP. In other words, the AC may further update the information about the second AP, where the information about the second AP includes information about a neighbor AP of the second AP and the like. In the example shown in FIG. 9, the second AP includes the AP 1 and the AP 3.

When the load of the first AP changes, the AC also needs to update the network topology structure of the managed AP. To be specific, the AC also needs to update the information about the second AP.

Therefore, when the first AP newly joins the AP managed by the AC, or when the load of the first AP changes, the AC may need to update the information about the second AP. After updating the information about the second AP, the AC may also notify the second AP of updated information about the neighbor AP of the second AP. After receiving the second configuration update request, the second AP may update the pre-stored information about the neighbor AP of the second AP. In this way, the updated information about the neighbor AP of the second AP is synchronized between the AC and the second AP. Specifically, the AC may send the second configuration update request to the second AP, where the second configuration update request includes the updated information about the neighbor AP of the second AP. Optionally, after receiving the second configuration update request sent by the AC, the second AP may further send second configuration update response information to the AC, used by the AC to determine that the second configuration update request is correctly received.

For example, it is assumed that the AP 1 and the AP 3 are original neighbor APs of the first AP. After the first AP newly joins the AP managed by the AC or the load of the first AP changes, the AC re-determines a neighbor AP for the first AP based on the load information of the first AP, the network topology information of the AP managed by the AC, and the load information of another AP managed by the AC. To be specific, the AC updates the information about the neighbor AP of the first AP, and readjusts the network topology structure. It is assumed that updated neighbor APs of the first AP are the AP 4 and the AP 5, and updated information about the neighbor APs of the first AP is information about the AP 4 and the AP 5. The foregoing second AP may include the AP 4 and the AP 5, and updated information about the second AP includes information about a neighbor AP of the AP 4 and information about a neighbor AP of the AP 5.

It should be understood that, in the embodiments of this application, "first", "second", and the like are merely intended to indicate that a plurality of objects are different. For example, the first AP and the second AP are merely used to represent different APs, but should not cause any impact on the AP. The foregoing first, second, and the like should not impose any limitation on the embodiments of this application.

It should be further understood that the foregoing descriptions are merely intended to help a person skilled in the art better understand the embodiments of this application, but are not intended to limit the scope of the embodiments of this application. It is clear that a person skilled in the art may make various equivalent modifications or changes based on the foregoing examples. For example, some steps in the embodiments of the method described above may be unnecessary, some steps may be newly added, or any two or more of the foregoing embodiments may be combined. Such a modified, changed, or combined solution also falls within the scope of the embodiments of this application.

It should be further understood that, the foregoing descriptions of the embodiments of this application focus on a difference between the embodiments. For same or similar parts that are not mentioned, refer to each other. For brevity, details are not described herein.

It should be further understood that sequence numbers of the foregoing processes do not mean execution sequences. The execution sequences of the processes should be determined based on functions and internal logic of the processes, and should not constitute any limitation on implementation processes of the embodiments of this application.

It should be understood that division of manners, cases, types, and embodiments in the embodiments of this application are merely for ease of description, but should not constitute any special limitation, and features in various manners, types, cases, and embodiments may be combined when there is no contradiction.

It should be further understood that in the embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

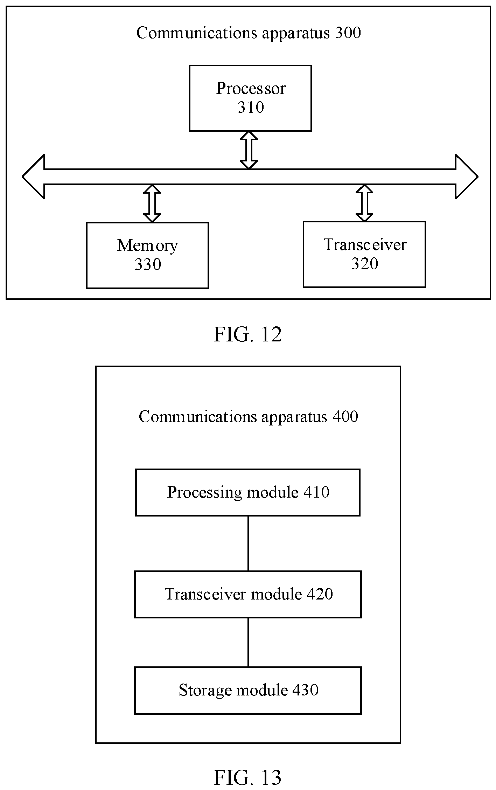

The foregoing describes in detail the network configuration method in the embodiments of this application with reference to FIG. 1 to FIG. 11. The following describes a communications apparatus in the embodiments of this application with reference to FIG. 12 to FIG. 15. It should be understood that the communications apparatus in FIG. 12 to FIG. 15 can perform the steps of the synchronization method in the embodiments of this application.

FIG. 12 is a schematic block diagram of a communications apparatus 300 according to an embodiment of this application. The apparatus 300 may correspond to the AC described in the embodiments of the foregoing methods, or may be a chip or a component applied to the AC. In addition, the apparatus 300 is configured to perform the foregoing method 200 and actions or processing processes performed by the AC in the embodiments. As shown in FIG. 12, the communications apparatus 300 may include a processor 310 and a transceiver 320.

The processor 310 is configured to determine configuration status information.

The transceiver 320 is configured to send the configuration status information to a first access point AP, where the configuration status information is used to perform network configuration on the first AP, and the first AP communicates with a terminal device by using a 3rd generation partnership project 3GPP access mode.

Optionally, the configuration status information includes at least one piece of the following information: an identifier of the first AP, a name of the first AP, cell information of the first AP, a tracking area code TAC of the first AP, an enterprise network identifier of the first AP, a service provider identifier of the first AP, and information about a neighbor AP of the first AP.

The information about the neighbor AP of the first AP includes at least one piece of the following information: identifier information of the neighbor AP of the first AP, service information of the neighbor AP of the first AP, and capability information of the neighbor AP of the first AP.

The service information includes at least one of a service network supported by the AP and a public land mobile network PLMN of the AP.

The capability information includes at least one of a protocol supported by the AP, a data plane encapsulation capability and load of the AP.

Optionally, the transceiver 320 is further configured to receive a join request sent by the first AP, where the join request is used to request to join an AP managed by the communications apparatus. The processor 310 is further configured to update, based on the join request, network topology information managed by the communications apparatus.

Optionally, the processor 310 is specifically configured to: generate the information about the neighbor AP of the first AP; and/or update information about a second AP, where the second AP is a neighbor AP of the first AP.

Optionally, the transceiver 320 is further configured to receive a configuration status request sent by the first AP, where the configuration status request includes load information of the first AP. The processor 310 is further configured to update the information about the neighbor AP of the first AP based on the load information of the first AP.

Optionally, the transceiver 320 is further configured to send a first configuration update request to the first AP, where the first configuration update request includes updated information about the neighbor AP of the first AP.

Optionally, the transceiver 320 is further configured to send a second configuration update request to the second AP, where the second AP is a neighbor AP of the first AP, and the second configuration update request includes updated information about a neighbor AP of the second AP.

Optionally, the transceiver 320 may include a receiver and a transmitter, configured to perform the steps of receiving information and sending information by the AC in the foregoing method embodiments and the embodiments shown in FIG. 6, FIG. 7, FIG. 10, and FIG. 11. Optionally, as shown in FIG. 12, the communications apparatus 300 may further include a memory 330, configured to store instructions executed by the processor 310 and the transceiver 320. The processor 310, the transceiver 320, and the memory 330 are in a communication connection. The memory 330 stores the instructions. The processor 310 is configured to execute the instructions stored in the memory 330. The transceiver 320 is configured to perform specific signal receiving and sending when driven by the processor 310.

It should be understood that, for a specific process of performing the foregoing corresponding steps by each part in the apparatus 300, refer to related descriptions of the AC with reference to the embodiments of the foregoing methods and the method embodiments shown in FIG. 6, FIG. 7, FIG. 10, and FIG. 11. For brevity, details are not described herein again.

It should be understood that the processor 310 may be implemented by a processing module, the transceiver 320 may be implemented by a transceiver module, and the memory 330 may be implemented by a storage module. As shown in FIG. 13, a communications apparatus 400 may include a processing module 410, a transceiver module 420, and a storage module 430.

Optionally, the transceiver module 420 may include a receiving module (unit) and a sending module (unit), configured to perform the steps of receiving information and sending information by the AC in the foregoing method embodiments and the embodiments shown in FIG. 6, FIG. 7, FIG. 10, and FIG. 11.

The communications apparatus 300 shown in FIG. 12 or the communications apparatus 400 shown in FIG. 13 can implement the steps performed by the AC in the foregoing method embodiments and the embodiments shown in FIG. 6, FIG. 7, FIG. 10, and FIG. 11. For similar descriptions, refer to the descriptions in the foregoing corresponding method. To avoid repetition, details are not described herein again.

It should be further understood that the communications apparatus 300 shown in FIG. 12 or the communications apparatus 400 shown in FIG. 13 may be an AC.

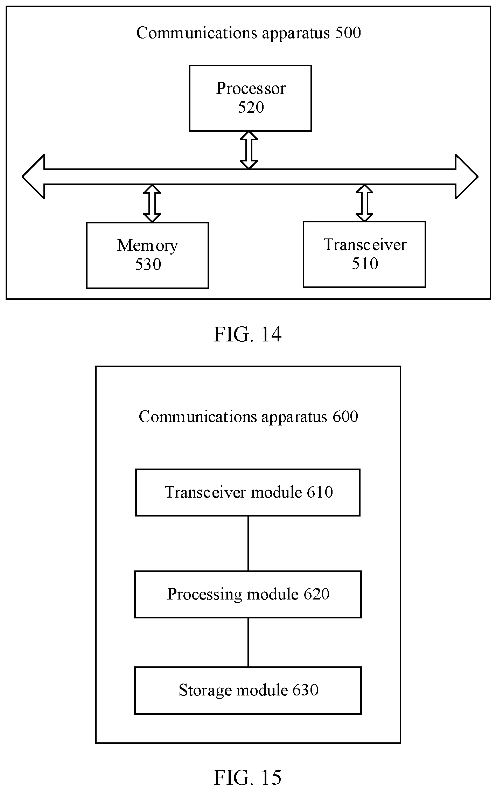

FIG. 14 is a schematic block diagram of a communications apparatus 500 according to an embodiment of this application. The apparatus 500 may correspond to the first AP described in the embodiments of the foregoing methods, or may be a chip or a component applied to the first AP. In addition, the apparatus 500 is configured to perform the foregoing method 200 and actions or processing processes performed by the first AP in the embodiments. As shown in FIG. 14, the communications apparatus 500 may include a processor 510 and a transceiver 520.

The transceiver 510 is configured to receive configuration status information sent by an access point controller AC, where the configuration status information is used to perform network configuration on the communications apparatus.

The processor 520 is configured to perform network configuration based on the configuration status information, where the communications apparatus communicates with a terminal device by using a 3rd generation partnership project 3GPP access mode.

Optionally, the configuration status information includes at least one piece of the following information: an identifier of the communications apparatus, a name of the communications apparatus, cell information of the communications apparatus, a tracking area code TAC of the communications apparatus, an enterprise network identifier of the communications apparatus, a service provider identifier of the communications apparatus, and information about a neighbor communications apparatus of the communications apparatus.

The information about the neighbor communications apparatus of the communications apparatus includes at least one piece of the following information: identifier information of the neighbor communications apparatus of the communications apparatus, service information of the neighbor communications apparatus of the communications apparatus, and capability information of the neighbor communications apparatus of the communications apparatus.

The service information includes at least one of a service network supported by the communications apparatus and a public land mobile network PLMN of the communications apparatus.

The capability information includes at least one of a protocol supported by the communications apparatus, a data plane encapsulation capability and load of the communications apparatus.

Optionally, the transceiver 510 is further configured to send a join request to the AC, where the join request is used by the AC to update network topology information managed by the AC.

Optionally, the transceiver 510 is further configured to send a configuration status request to the AC, where the configuration status request includes load information of the communications apparatus.

Optionally, the transceiver 510 is further configured to receive a first configuration update request sent by the AC, where the first configuration update request includes updated information about the neighbor communications apparatus of the communications apparatus, and the updated information about the neighbor communications apparatus of the communications apparatus is determined based on at least one of the network topology information managed by the AC and the load information of the communications apparatus.

The processor is further configured to update the information about the neighbor communications apparatus of the communications apparatus based on the first configuration update request.

Optionally, the transceiver 510 may include a receiver and a transmitter, configured to perform the steps of receiving information and sending information by the first AP in the foregoing method embodiments and the embodiments shown in FIG. 6, FIG. 7, FIG. 10, and FIG. 11. Optionally, the communications apparatus 500 may further include a memory 530, configured to store instructions executed by the processor 520 and the transceiver 510. The processor 520, the transceiver 510, and the memory 530 are in a communication connection. The memory 530 stores the instructions. The processor 520 is configured to execute the instructions stored in the memory 530. The transceiver 510 is configured to perform specific signal receiving and sending when driven by the processor 520.

It should be understood that, for a specific process of performing the foregoing corresponding steps by each part in the apparatus 500, refer to related descriptions of the first AP with reference to the embodiments of the foregoing methods and the method embodiments shown in FIG. 6, FIG. 7, FIG. 10, and FIG. 11. For brevity, details are not described herein again.

It should be understood that the processor 520 may be implemented by a processing module, the transceiver 510 may be implemented by a transceiver module, and the memory 530 may be implemented by a storage module. As shown in FIG. 15, a communications apparatus 600 may include a transceiver module 610, a processing module 620, and a storage module 630.

Optionally, the transceiver module 610 may include a receiving module (unit) and a sending module (unit), configured to perform the steps of receiving information and sending information by the first AP in the foregoing method embodiments and the embodiments shown in FIG. 6, FIG. 7, FIG. 10, and FIG. 11.

The communications apparatus 500 shown in FIG. 14 or the communications apparatus 600 shown in FIG. 15 can implement the steps performed by the first AP in the foregoing method embodiments and the embodiments shown in FIG. 6, FIG. 7, FIG. 10, and FIG. 11. For similar descriptions, refer to the descriptions in the foregoing corresponding method. To avoid repetition, details are not described herein again.

It should be further understood that the communications apparatus 500 shown in FIG. 14 or the communications apparatus 600 shown in FIG. 15 may be an AP.

It should be further understood that division into the units in the apparatus is merely logical function division. In an actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. Alternatively, each unit may be stored in the memory in a form of a program to be invoked by a processing element of the apparatus to execute a function of the unit. The processing element herein may also be referred to as a processor, and may be an integrated circuit having a signal processing capability. In an implementation process, the steps in the foregoing methods or the foregoing units may be implemented by using a hardware integrated logic circuit in the processing element, or may be implemented in a form of software invoked by the processing element.

For example, modules (units) in any one of the foregoing apparatuses may be configured as one or more integrated circuits for implementing the foregoing methods, for example, one or more application-specific integrated circuits (application specific integrated circuit, ASIC), one or more digital signal processors (digital signal processor, DSP), one or more field programmable gate arrays (field programmable gate array, FPGA), or a combination of at least two of the integrated circuits. For another example, when the unit in the apparatus is implemented by scheduling a program by a processing element, the processing element may be a general purpose processor, for example, a central processing unit (central processing unit, CPU) or another processor that can invoke the program. For still another example, the units may be integrated and implemented in a form of a system-on-a-chip (system-on-a-chip, SOC).

The foregoing apparatus embodiments may completely correspond to the AC and the first AP in the method embodiments, and a corresponding module or unit performs a corresponding step. For example, when the apparatus is implemented by a chip, the receiving unit may be an interface circuit that is of the chip and that is configured to receive a signal from another chip or apparatus. The foregoing sending unit is an interface circuit of the apparatus, and is configured to send a signal to another apparatus. For example, when the apparatus is implemented by a chip, the sending unit is an interface circuit that is of the chip and that is configured to send a signal to another chip or apparatus.

It should be understood that, in the embodiments of this application, the processor may be a CPU, or may further be another general purpose processor, a DSP, an ASIC, an FPGA, or another programmable logic device, discrete gate or transistor logic device, discrete hardware component, or the like.

It should be further understood that the memory in the embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of random access memories (random access memory, RAM) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a communications system. The communications system includes the foregoing AP, the foregoing AC, and the terminal device.

An embodiment of this application further provides a computer-readable medium, configured to store computer program code. The computer program includes instructions used to perform the network configuration method in the foregoing method 200 in the embodiments of this application. The readable medium may be a read-only memory (read-only memory, ROM) or a random access memory (random access memory, RAM). This is not limited in this embodiment of this application.

This application further provides a computer program product. The computer program product includes instructions, and when the instructions are executed, the AP and the AC respectively perform operations corresponding to the first AP and the AC in the foregoing methods.

An embodiment of this application further provides a system chip. The system chip includes a processing unit and a communications unit. The processing unit may be, for example, a processor, and the communications unit may be, for example, an input/output interface, a pin, or a circuit. The processing unit may execute a computer instruction, so that the chip in the communications apparatus performs any network configuration method provided in the embodiments of this application.

Optionally, any communications apparatus provided in the foregoing embodiments of this application may include the system chip.

Optionally, the computer instruction is stored in a storage unit.

Optionally, the storage unit is a storage unit inside the chip, such as a register or a cache. Alternatively, the storage unit may be a storage unit that is inside the terminal and that is located outside the chip, such as a ROM, another type of static storage device that can store static information and instructions, or a RAM. The processor mentioned in any of the foregoing descriptions may be a CPU, a microprocessor, an ASIC, or one or more integrated circuits used to control program execution of the foregoing network configuration method. The processing unit and the storage unit may be decoupled, are separately disposed on different physical devices, and are connected in a wired or wireless manner to implement functions of the processing unit and the storage unit, to support the system chip in implementing various functions in the foregoing embodiments. Alternatively, the processing unit and the memory may be coupled to a same device.

It may be understood that the memory in this embodiment of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of random access memories (random access memory, RAM) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

Terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

Names may be assigned to various objects that may appear in this application, for example, various messages/information/devices/network elements/systems/apparatuses/actions/operations/procedures/concepts. It may be understood that these specific names do not constitute a limitation on the related objects, and the assigned names may change with a factor such as a scenario, a context, or a use habit. Technical meanings of technical terms in this application should be understood and determined mainly based on functions and technical effects that are of the technical terms and that are reflected/performed in the technical solutions.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the apparatus embodiments described in the foregoing are only examples. For example, division into the units is merely logical function division, and may be another manner of division during actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit. When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The storage medium includes any medium that can store program code, for example, a USB flash drive, a removable hard disk, a read-only memory (read-only memory, ROM), a random access memory (random access memory, RAM), a magnetic disk, or an optical disc. The foregoing descriptions are merely specific implementations of this application, but the protection scope of this application is not limited thereto. Any variation or replacement that can be readily figured out by a person skilled in the art within the technical scope disclosed in this application shall fall within the protection scope of this application. Therefore, the protection scope of this application shall be subject to the protection scope of the claims.

## Claims

1. A network configuration method, comprising:
sending, by an access point controller AC, configuration status information to a first access point AP, wherein the configuration status information is used to perform network configuration on the first AP, and the first AP communicates with a terminal device by using a 3rd generation partnership project 3GPP access mode.

2. The method according to claim 1, wherein the configuration status information comprises at least one piece of the following information:
an identifier of the first AP, a name of the first AP, cell information of the first AP, a tracking area code TAC of the first AP, an enterprise network identifier of the first AP, a service provider identifier of the first AP, and information about a neighbor AP of the first AP;
the information about the neighbor AP of the first AP comprises at least one piece of the following information:
identifier information of the neighbor AP of the first AP, service information of the neighbor AP of the first AP, and capability information of the neighbor AP of the first AP;
the service information comprises at least one of a service network supported by the AP and a public land mobile network PLMN of the AP; and
the capability information comprises at least one of a protocol supported by the AP, a data plane encapsulation capability and load of the AP.

3. The method according to claim 1 or 2, wherein the method further comprises:
receiving, by the AC, a join request sent by the first AP, wherein the join request is used to request to join an AP managed by the AC; and
updating, by the AC based on the join request, network topology information managed by the AC.

4. The method according to claim 3, wherein the updating the network topology information comprises:
generating the information about the neighbor AP of the first AP; and/or
updating information about a second AP, wherein the second AP is a neighbor AP of the first AP.

5. The method according to any one of claims 1 to 4, wherein the method further comprises:
receiving, by the AC, a configuration status request sent by the first AP, wherein the configuration status request comprises load information of the first AP; and
updating, by the AC based on the load information of the first AP, the information about the neighbor AP of the first AP.

6. The method according to claim 5, wherein the method further comprises:
sending, by the AC, a first configuration update request to the first AP, wherein the first configuration update request comprises updated information about the neighbor AP of the first AP.

7. The method according to any one of claims 4 to 6, wherein the method further comprises:
sending, by the AC, a second configuration update request to the second AP, wherein the second AP is a neighbor AP of the first AP, and the second configuration update request comprises updated information about a neighbor AP of the second AP.

8. A network configuration method, comprising:
receiving, by an access point AP, configuration status information sent by an access point controller AC, wherein the configuration status information is used to perform network configuration on the AP; and
performing, by the AP based on the configuration status information, network configuration, wherein the AP communicates with a terminal device by using a 3rd generation partnership project 3GPP access mode.

9. The method according to claim 8, wherein the configuration status information comprises at least one piece of the following information:
an identifier of the AP, a name of the AP, cell information of the AP, a tracking area code TAC of the AP, an enterprise network identifier of the AP, a service provider identifier of the AP, and information about a neighbor AP of the AP;
the information about the neighbor AP of the AP comprises at least one piece of the following information:
identifier information of the neighbor AP of the AP, service information of the neighbor AP of the AP, and capability information of the neighbor AP of the AP;
the service information comprises at least one of a service network supported by the AP and a public land mobile network PLMN of the AP; and
the capability information comprises at least one of a protocol supported by the AP, a data plane encapsulation capability and load of the AP.

10. The method according to claim 8 or 9, wherein the method further comprises:
sending, by the AP, a join request to the AC, wherein the join request is used by the AC to update network topology information managed by the AC.

11. The method according to any one of claims 8 to 10, wherein the method further comprises:
sending, by the AP, a configuration status request to the AC, wherein the configuration status request comprises load information of the AP.

12. The method according to any one of claims 8 to 11, wherein the method further comprises:
receiving, by the AP, a first configuration update request sent by the AC, wherein the first configuration update request comprises updated information about the neighbor AP of the AP, and the updated information about the neighbor AP of the AP is determined based on at least one of the network topology information managed by the AC and the load information of the AP; and
updating, by the AP based on the first configuration update request, the information about the neighbor AP of the AP.

13. A communications apparatus, comprising:
a processor, configured to determine configuration status information; and
a transceiver, configured to send the configuration status information to a first access point AP, wherein the configuration status information is used to perform network configuration on the first AP, and the first AP communicates with a terminal device by using a 3rd generation partnership project 3GPP access mode.

14. The communications apparatus according to claim 13, wherein the configuration status information comprises at least one piece of the following information:
an identifier of the first AP, a name of the first AP, cell information of the first AP, a tracking area code TAC of the first AP, an enterprise network identifier of the first AP, a service provider identifier of the first AP, and information about a neighbor AP of the first AP;
the information about the neighbor AP of the first AP comprises at least one piece of the following information:
identifier information of the neighbor AP of the first AP, service information of the neighbor AP of the first AP, and capability information of the neighbor AP of the first AP;
the service information comprises at least one of a service network supported by the AP and a public land mobile network PLMN of the AP; and
the capability information comprises at least one of a protocol supported by the AP, a data plane encapsulation capability and load of the AP.

15. The communications apparatus according to claim 13 or 14, wherein the transceiver is further configured to:
receive a join request sent by the first AP, wherein the join request is used to request to join an AP managed by the communications apparatus; and
the processor is further configured to update, based on the join request, network topology information managed by the communications apparatus.

16. The communications apparatus according to claim 14, wherein the processor is specifically configured to:
generate the information about the neighbor AP of the first AP; and/or
update information about a second AP, wherein the second AP is a neighbor AP of the first AP.

17. The communications apparatus according to any one of claims 13 to 16, wherein the transceiver is further configured to:
receive a configuration status request sent by the first AP, wherein the configuration status request comprises load information of the first AP; and
the processor is further configured to update the information about the neighbor AP of the first AP based on the load information of the first AP.

18. The communications apparatus according to claim 17, wherein the transceiver is further configured to:
send a first configuration update request to the first AP, wherein the first configuration update request comprises updated information about the neighbor AP of the first AP.

19. The communications apparatus according to any one of claims 16 to 18, wherein the transceiver is further configured to:
send a second configuration update request to the second AP, wherein the second AP is a neighbor AP of the first AP, and the second configuration update request comprises updated information about a neighbor AP of the second AP.

20. A communications apparatus, comprising:
a transceiver, configured to receive configuration status information sent by an access point controller AC, wherein the configuration status information is used to perform network configuration on the communications apparatus; and
a processor, configured to perform network configuration based on the configuration status information, wherein the communications apparatus communicates with a terminal device by using a 3rd generation partnership project 3GPP access mode.

21. The communications apparatus according to claim 20, wherein the configuration status information comprises at least one piece of the following information:
an identifier of the communications apparatus, a name of the communications apparatus, cell information of the communications apparatus, a tracking area code TAC of the communications apparatus, an enterprise network identifier of the communications apparatus, a service provider identifier of the communications apparatus, and information about a neighbor communications apparatus of the communications apparatus;
the information about the neighbor communications apparatus of the communications apparatus comprises at least one piece of the following information:
identifier information of the neighbor communications apparatus of the communications apparatus, service information of the neighbor communications apparatus of the communications apparatus, and capability information of the neighbor communications apparatus of the communications apparatus;
the service information comprises at least one of a service network supported by the communications apparatus and a public land mobile network PLMN of the communications apparatus; and
the capability information comprises at least one of a protocol supported by the communications apparatus, a data plane encapsulation capability and load of the communications apparatus.

22. The communications apparatus according to claim 20 or 21, wherein the transceiver is further configured to:
send a join request to the AC, wherein the join request is used by the AC to update network topology information managed by the AC.

23. The communications apparatus according to any one of claims 20 to 22, wherein the transceiver is further configured to:
send a configuration status request to the AC, wherein the configuration status request comprises load information of the communications apparatus.

24. The communications apparatus according to any one of claims 20 to 23, wherein the transceiver is further configured to:
receive a first configuration update request sent by the AC, wherein the first configuration update request comprises updated information about the neighbor communications apparatus of the communications apparatus, and the updated information about the neighbor communications apparatus of the communications apparatus is determined based on at least one of the network topology information managed by the AC and the load information of the communications apparatus; and
the processor is further configured to update the information about the neighbor communications apparatus of the communications apparatus based on the first configuration update request.

25. A storage medium, comprising a program, wherein when the program is run by a processor, the method according to any one of claims 1 to 12 is performed.

26. A chip system, wherein the chip system comprises:
a memory, configured to store instructions; and
a processor, configured to invoke the instructions from the memory and run the instructions, so that a communications device on which the chip system is installed is enabled to perform the method according to any one of claims 1 to 12.
